# EUROPEAN PATENT SPECIFICATION

(11) **EP 1 253 009 B1**
(45) Date of publication and mention of the grant of the patent: **28.07.2004**
(21) Application number: 02252974.7
(22) Date of filing: 26.04.2002
(51) Int. Cl.: B41F 9/00, B32B 7/12, B32B 27/08, B32B 31/30

(54) **Method for producing a photogravure printed laminated packaging material**
Methode zur Herstellung eines Tiefdruck-hergestellten Mehrschicht-Verpackungsmaterials
Procédé de production d'une feuille d'emballage stratifiée fabriquée par photogravure

(30) Priority: 27.04.2001 JP 2001131563
(43) Date of publication of application: 30.10.2002
(73) Proprietor: Japan Patent Management Co. Ltd., Tokyo (JP)
(72) Inventor: Kawai, Nobuyuki, Owariasahi-shi, Aichi-ken (JP); Fukumori, Hirotsugu, Yokohama-shi, Kanagawa-ken (JP)
(74) Representative: King, James Bertram

(56) References cited:
- EP-A- 0 714 762
- EP-A- 1 072 407
- EP-A- 1 142 703
- WO-A-00/18578
- WO-A-98/15407
- US-A- 4 254 173
- US-A- 5 314 561
- US-A- 5 491 018

## Description

This invention relates to a method of producing a laminated packaging material with a base film thereof printed by photogravure printing using photogravure printing inks. More specifically, this invention relates to a packaging material production method capable of providing an environment friendly photogravure printed laminated packaging material by using a processing technology requiring less organic solvent as compared to the conventional technology in the photogravure printing as well as in laminating when an intermediate layer base film and/or a heat sealable film are laminated on the photogravure printed film, or when a heat sealable resin layer is formed on a surface of the base film or the intermediate layer base film.

### PRIOR ART

Various types of laminated packaging materials each having a printed base film with an intermediate base film and/or a heat sealable resin layer for giving the heat sealing capability thereto laminated thereon for giving the functionality such as the gas barrier capability are widely used.

When photogravure printing is performed on a base film of any of these laminated packaging materials, the photogravure printing method performed with an organic solvent type of photogravure ink is often employed, and further when intermediate base film and/or heat sealable film, or a heat sealable resin layer are laminated on the base film, the dry lamination method performed with an organic solvent type of adhesive and/or an organic solvent type of anchor coating agent are often employed.

However, to satisfy the needs for environment protection, various methods are now sought for reducing a quantity of the organic solvent used for the purposes as described above. Namely in the field of photogravure printing technology, the photogravure printing method using water based photogravure ink as disclosed in US-A-5 491 018 and EP-A-1 072 407 is now watched with keen attentions. Only use of a water based ink is inadequate for application of the water based photogravure printing for industrial purposes (as described hereinafter), and further the ink has its intrinsic defects (also described later) as an ink because it is water based, so that the photogravure printing method performed with a water based photogravure printing ink has not been established. On the other hand, in the field of lamination technology, a resin for extrusion lamination not requiring any anchor coating agent has been developed and is now drawing strong attentions WO-A-0018578 see for example and US-A-5 314 561. However, use of a method enabling reduction of a quantity of organic solvent either the photogravure printing process or the lamination process in the laminated packaging material production method in which the photogravure printing is combined with the lamination method is not adequate, and development of environment friendly new laminated packaging material is possible only when the method enabling reduction of a quantity of ink used both in the photogravure print process and the lamination process is provided.

### OBJECT OF THIS INVENTION

It is an object of the present invention to provide a method of producing environmental friendly laminated packaging materials, in which a smaller quantity of organic solvent is used in the photogravure printing process as well as in the lamination process when an intermediate base material film and/or a heat sealable film or a heat sealable resin layer is laminated on a photogravure printed base film thereof, and packaging materials especially for foods or the like produced by this production method.

According to this invention there is provided a method as defined by claim 1.

Preferably heat sealable resin layer is applied to a surface of the intermediate layer base film. The photogravure printed material is subject to an extrusion lamination method using a polar resin not requiring any anchor coating agent. An extrusion lamination method using a polar resin not requiring application of an anchor coating agent is also used for formation of the heat sealable resin layer.

In an embodiment water based printing inks for six primary colours of yellow, red, blue, orange, green, and purple in addition to the two colours of black and white are used as basic feed inks in the photogravure printing performed with water based photogravure printing inks, printing plates each with 200 to 400 lines and plate depth in the range from 10 to 17 µ are used, and colours obtained by overprinting one colour after another within the above mentioned six primary colour and two colours of black and white to obtain desired hues in printing.

This invention provides a photogravure printed laminated packaging material comprising a base film photogravure printed with water based photogravure printing inks, and a polar resin layer formed by the extrusion lamination method as a resin layer for lamination between the base film and the intermediate layer base film and also between said intermediate layer and a heat sealable film laminated thereon.

Preferably water based printing inks for six colours of yellow, red, blue, orange, green, and purple in addition to the two colours of black and white are used for photogravure printing the base film as basic feed printing inks; printing plates with 200 to 400 lines and plate depth in the range from 10 to 17 µ are used as printing plates for printing with the feed printing inks; and further the photogravure printing method is used in printing to obtain desired hues by using the six primary colours and additional two colours of black and white as a single colour respectively or by overprinting one colour after another.

This invention is further described with reference to the drawings illustration, by way of example, a production method and laminated film. In the drawings:
Fig. 1 is an explanatory view showing a laminated packaging material according to a third embodiment of the present invention; and
Fig. 2 is an explanatory view showing a laminated packaging material according to a fourth embodiment of the present invention.

A feature of the present invention consists in the use of the photogravure printing method using a photogravure printing ink for reducing the quantity of organic solvent used in lamination of an intermediate layer base film and a heat sealable film on a photogravure printed base film as well as the formation of a heat sealable resin layer on a surface of the printed base film or an intermediate layer base film and use of an extrusion lamination method using a polar resin, (i.e. resin having polar groups), not requiring application of an anchor coating agent for lamination nor for formation of a heat sealable resin layer thereon.

When the water based printing ink is used in the photogravure printing, if a conventional type of printing plate and a conventional type of printing method both dependent of three primary colours are employed, a laminated packaging materials having desired hues can not be obtained.

To solve the problems as described above, as the present inventor already proposed a new photogravure printing method using water based photogravure ink (Japanese Patent Application No. 2000 377177), the present inventor concluded that, by combining the photogravure printing method described above with an extrusion lamination method using a resin not requiring the processing with any anchor coating agent, it would be possible to obtain a laminated packaging material having desired colour hues and suited to practical use.

In the proposal described above, in the photogravure printing method using an water based photogravure printing ink, in addition to the two colours of black and white, other six colours of yellow, red, blue, orange, green, and purple, namely eight colours in all are used as primary colours for the water based photogravure printing ink used as the basic feed ink. To obtain hues for orange, green, and purple only with the three primary colours of yellow, red, and blue in addition to the two colours of black and white, yellow and red colours, yellow and blue colours, and red and blue colours are used in combination respectively, but the obtained hues are rather dirty, and hues required by a client can not be obtained, but with the new proposal above, when orange and yellow or red, green and yellow or blue, and purple and red or blue colours are selectively used in combination to obtain hues for orange, green, and purple colours respectively, the hues are not dirty, and clear hues required by a client can be obtained.

Configuration of a printing plate used for printing is another important factor when the water based photogravure ink is used. Namely, when a water based printing ink is used for printing, if the printing plate to be used is a conventional one (a low mesh with about 175 lines and deep plate with the depth of 18 to 30 µ), as the water based photogravure printing ink is hardly dried due to its intrinsic defect, the printing speed becomes lower, and in addition, dots on a printed material are not clear (with the low reproducibility of dots), which makes it impossible to obtain desired hues, and in addition, when photogravure printing ink is used, such troubles as clogging of the plate, crossing over thereon, doctor lines, and contamination of a printing drum often occur due to the low re-solubility into water or alcoholic solvent, and a printed material with desired quality can hardly be obtained partially because of these troubles. On the other hand, with the new proposals, not a deep printing plate but a shallow printing plate with the total line number in the range from 200 to 400 lines, preferably 350 lines and also with the depth in the range from 10 to 17 µ, preferably in the range from 12 to 13 µ is used, so that all of the troubles encountered in use of the conventional type of printing plate as described above never occur. This is true for any type of printing plate. When the number of lines is smaller than 200, dots on the printing ink film are fuzzy as the water based ink does not dry fast, which makes it difficult to obtain desired hues, and on the contrary, when the number of lines is larger than 400, a bank surrounding a cell on a photogravure printing plate (intaglio plate) is cut, and a dot on water based ink film is not formed, or a dot becomes smaller, so that the colour tone width becomes narrower and desired hues can not be obtained.

When the plate depth is 17 µ or more, because of the hardness of water based ink in resolving in an water based solution due to an intrinsic defect of the water based ink, such troubles as clogging of a printing plate, crossing over thereon, doctor lines, and contamination of a printing drum occur. Further due to the hardness of water based printing ink in drying, not only the printing speed becomes lower, but also dots on a printed material become fuzzy, which makes it difficult to obtain desired hues. When the depth of engraving on a printing plate is 10 µ or less, unevenness is generated on a surface of the printing plate with varies hues and the ink film is thin, so that desired colour density can hardly be obtained.

Another important thing for obtaining desired hues with the printing plate as described above is the printing method by overprinting one colour after another within the eight colours (process colours) described above, with the printing plate having a different dot percentage for each colour. When printing is performed with the conventional type of oily photogravure printing inks in combination, the inks are quickly dried, so that dots on a printed material are not clear and the hues vary to a disadvantageous level, and to overcome these troubles, generally the feed inks are previously kneaded well to form an ink having a particular colour, and printing is performed with the particular colour ink. In contrast, when an water based printing ink is used for printing, the circumstances are completely different, and as the problem in printing with a water based printing ink having a particular colour is the low re-solubility of the water based ink into a solvent, which is an intrinsic defect of the water based ink, and therefore it is difficult to use the ink having a particular colour again and again, and it is required to prepare an ink having a desired colour each time printing is performed, which is a serious defect of an water based printing ink from the economical point of view.

On the other hand, the new proposal described above makes it possible to combine use of the six primary colours described above in addition to the two colours of black and white, the printing plate as described above, and the printing method by overprinting one colour after another within the primary colours described above, and with this combination, reproducibility of dots on a printed material are far more excellent than that provided when oily photogravure printing inks are used and therefore hue control satisfying customers' demands is possible without mixing any special ink having a particular colour. In other words, in the hue control technique for printing with a photogravure printing plate (intaglio plate), a value obtained by measuring a ratio of an area of cells surrounded by banks against a unit area on the plate with a dot meter is called dot percentage, and when photogravure printing with water based inks is performed using printing plate with varied dot percentages for different colours respectively, dots each having a desired size (area) can be obtained with inks satisfying the dot percentages required for different printing plates and the reproducibility is far more excellent as compared to that provided when oily inks are used.

Therefore, to obtain a hue satisfying customer demands, printing may be performed by selectively using, for overprinting, printing plates each having a different dot percentage for orange and yellow or red colours for orange, those for green and yellow or blue colours for green, or those for purple and red or blues for purple respectively, and in this case a visually desirable hue as a collection of different dot percentages for different colours can be obtained on a printed material.

Then, by performing photogravure printing with a water based ink on a base film and further performing extrusion lamination using a polar resin for lamination not requiring any anchor coating agent when an intermediate layer base film and/or a heat sealable film are laminated on each other, or when a heat sealable resin layer is formed on a surface of the printing base film or the intermediate layer base film, it is possible to obtain an ideal and environment friendly packaging material which can be put into practical use and also which enables reduction of a quantity of organic solvents used in printing.

Of the various types of lamination methods for obtaining a laminated packaging material, only the extrusion lamination method not requiring an anchor coating agent and performed by using a polar resin makes it possible to reduce a quantity of organic solvents used in printing and also to reduce the printing cost.

Namely, when a three layered packaging material produced by the present production method, namely a laminated packaging material consisting of a printed base film, an intermediate layer base film having the gas barrier capability, and a heat sealable film is compared to those produced by the various lamination methods as described above, in addition to difference in materials used for forming the three layers, there are the clear differences as described below.

At first, in the dry lamination method, a printed base film / a water based adhesive / an intermediate layer base film / a water based adhesive / and a heat sealable film are laminated on each other, cost for the water based adhesive and processing cost for lamination between the first and second layers and that for lamination between the second and third layers are required.

In the method in which both the dry lamination and extrusion lamination are employed, a printed base film / a water based adhesive /an intermediate layer base film / a water based anchor coating agent /an extrusion agent /and a beat sealable film, or a printed base film a water based adhesive / an intermediate layer base film /a water based anchor coating agent /and a heat sealable extrusion resin /are laminated on each other, cost for the water based adhesive ,water based anchor coating agent, and extrusion resin and processing cost for the dry and extrusion processes are required.

In the method in which both the dry lamination performed without using any solvent and the extrusion lamination are employed, a printed base film, a solvent free adhesive layer, an intermediate layer base film, a water based anchor coating layer, an extrusion resin layer, and a heat sealable film, or a printed base film /a solvent free adhesive / an intermediate layer base film / a water based anchor coating agent / an extrusion resin / and a heat sealable film, or printed base film / a solvent free adhesive / an intermediate layer base film / a water based anchor coating agent / heat sealable extrusion resin layer are laminated on each other, so that, in addition to the cost for the solvent free adhesive, water based anchor coating agent, and extrusion resin, also the cost for dry and extrusion processing is required.

In the extrusion lamination method, a printed base film / a water based anchor coating agent / an extrusion resin / an intermediate base film / a water based anchor coating agent / an extrusion resin / and a heat sealable film, or a printed base film / a water based anchor coating agent / an extrusion resin / an intermediate layer base film / a water based anchor coating agent / and a heat sealable extrusion resin layer are laminated on each other, so that, although cost for the water based anchor coating agent and extrusion resin is required, the required processing cost is only for one inline process, and because of this feature, the cost is lower as compared to any of those required for the lamination methods described above.

In contrast, with the present invention, a base film printed with a water based photogravure printing ink an extrusion resin / an intermediate layer base film / an extrusion resin / and a heat sealable film, or a base film printed with a water based photogravure printing ink / an extrusion resin / an intermediate layer base film / and a heat sealable extrusion resin layer are laminated on each other, so that only the cost for extrusion resin and the processing cost for only one inline process are required, and because of this feature, the cost is lowest of all the lamination methods described above.

Although no comment was made on materials cost for the water based adhesive, water based anchor coating agent, solvent free adhesive, and extrusion resin, depth of the extrusion resin layer can be made smaller according to the necessity, the present invention is more advantageous as compared to the lamination methods based on the conventional technology also in this point.

A film for giving the functionality such as the gas barrier capability or light shielding capability may be used as the intermediate layer base film, and two or more types of such films may be used in combination, but there is no specific limitation over configuration of the intermediate layer base film.

As the resin for lamination (extrusion resin) not requiring any anchor coating agent, for instance, a copolymer based resin such as ethylene (meta) acrylate, or a polyolefin based resin such as low density polyethylene or linear low density polyethylene denatured with a polar agent such as unsaturated carboxylic acid may be used, but there is no specific limitation over composition of the extrusion resin.

### Example 1

Using a bi-axial oriented polypropylene film 20 µ and printing inks for six primary colours of yellow, red, blue, orange, green, and purple each with the printing viscosity of Zahn cup number #3 16 sec prepared by using a water based photogravure printing ink available from the market (produced by Toyo Ink Kabushiki Kaisha, Aqua Echol JW22) and a diluted solvent in which water, ethanol, and isopropyl are mixed at the ratio of 50/30/20% (produced by Tokyo Ink Seizo Kabushiki Kaisha: AQ 602F), and also preparing with a laser a printing plate with 350 lines and the plate depth of 13 µ as a photogravure printing plate, a printed material was obtained by using, for overprinting, printing plates for orange and yellow or orange and red colours for orange, those for green and yellow or green and blue colours for green, or those for purple and red or purple and blue colours for purple respectively.

### Comparative example 1

Using an water based printing inks available from the market for the three primary colours of yellow, red, and blue, a printed material was obtained by using water based printing inks for the three primary colours of yellow, red, and blue available from the market and by using printing plates for red and yellow colours for orange, those for yellow and blue colours for green, and those for red and blue colours for purple respectively.

In Example 1, a printed material with desired clean hues could be obtained, but in Comparative Example 1, all of orange, green, and purple colours were dirty, and desired clear hues could not be obtained.

### Example 2

Using a bi-axial oriented polypropylene film 20 µ and printing inks for six primary colours of yellow, red, blue, orange, green, and purple as well as two colours of black and white each with the printing viscosity of Zahn cup #3 16 sec prepared by using an water based photogravure printing ink available from the market (produced by Toyo Ink Kabushiki Kaisha, Aqua Echol JW22) and a diluted solvent in which water, ethanol, and isopropyl alcohol are mixed at the ratio of 50/30/20% (produced by Tokyo Ink Seizo Kabushiki Kaisha: AQ 602F), and further preparing with a laser a printing plate with 350 lines and the plate depth of 13 µ as a photogravure printing plate, a printed material was obtained by using, for overprinting, 8 printing plates for 8 colours prepared as described above.

### Comparative Example 2

Printing plates each with 175 lines and plate depth of 18 µ for photogravure printing with oily printing inks were prepared with a laser, and a printed material was obtained by performing printing in the same method as that employed in Example 2 above.

In Comparative Example 2, the printing speed was lower (70 m/min) due to the hardness of being dried, which is an intrinsic defect of a water based ink, and further dots on the printed material were not clear. Further the printed material did not have a desired quality because such troubles as clogging of the printing plates, crossing over thereon, doctor lines, and contamination of the printing drum occurred due to the poor re-solubility of the water based inks, which is one of the intrinsic defects of an water based ink. In contrast, with the method employed in Example 2, the printing speed was improved to 130 m/min, and further the reproducibility of dots on the printed material was far more excellent as that in Comparative Example 2.

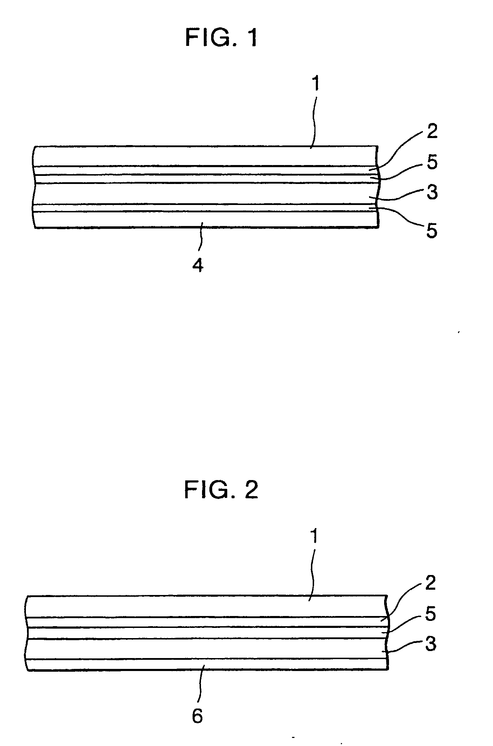

### Example 3 (Fig 1)

To obtain a laminated packaging material for snacks, printing 2 was performed with water based printing inks to a base film 1 comprising a bi-axial oriented polypropylene film (20 p) in the same method as that employed in Example 2 as shown in Fig. 1. Further an intermediate layer base film 3 comprising a polyester film (12 µ) with aluminium deposited thereon for giving the gas barrier capability and a heat sealable film 4 comprising a not stretched polypropylene film (20 µ) were laminated on the base film 1 by performing inline extrusion lamination with a polar resin (produced by Mitsui/Dupont Polychemical Kabushiki Kaisha; Nuclear AN 4228C) (10 µ) as a resin 5 for lamination not requiring any anchor coating agent due to polar groups.

### Comparative Example 3

A butadiene based or alcoholic solvent based anchor coating agent available from the market was applied to the base film with the depth of 20 µ prepared in Example 3 by the conventional extrusion lamination method, and then the intermediate layer base film with the depth of 12 µ used in Example 3 was laminated thereon by using a low density polyethylene resin with the depth of 15 µ as a resin for lamination. Then a urethane based or ethyl acetate solvent based anchor coating agent was applied inline to the laminated film described above, and further the heat sealable film 4 described above was laminated by extruding a low density polyethylene resin with the depth of 15 µ.

As a result, the laminated packing material prepared in Example 3 above had the same or similar physical properties as those of conventional materials, and in addition, such advantages as reduction of a quantity of organic solvents used in a printing process, smaller depth, and cost reduction were provided.

### Example 4 (Fig-2)

To obtain a laminated packaging material for powder soup, photogravure printing 2 was performed to a base film 1 comprising a bi-axial oriented polyester film (12 µ) with water based printing inks used in Example 2 as shown in Fig. 2, and a polar resin 5 (which was the same as that used in Example 3) (10 µ) was used as a resin 5 for lamination not requiring any anchor coating agent to laminate an intermediate layer base film 3 comprising aluminium foils (7 µ) for giving the gas barrier capability thereon. Then a polar resin (produced by Mitsui/Dupont Polychemical Kabushiki Kaisha; Nuclear AN 4225C) (20 µ) was extruded inline for lamination to form a heat sealable resin layer 6.

### Comparative Example 4

A butadiene based or alcoholic solvent based anchor coating agent available from the market was applied to the same base film as that in Example 4 by the conventional extrusion lamination method, and a low density polyethylene resin with the depth of 15 µ was extruded to laminate the intermediate layer base film with the depth of 7 µ thereon. Then a low density polyethylene resin with the depth of 20 µ was extruded inline to form a heat sealable resin layer thereon.

As a result, the laminated packaging material provided in Example 4 had the same or similar physical properties and heat sealing capability as those of laminated packaging materials based on the conventional technology, and in addition such advantages as reduction of a quantity of organic solvents used in a printing process, smaller depth, and cost reduction were provided.

As described above, the present invention can provide an established and consistent technology in the field of laminated packaging materials satisfying the requirements in the photogravure printing as well as in the lamination technology and also required for satisfying the needs for environment protection and reduction in a quantity of organic solvent used in the printing process, and the technology provided by the present invention has far more excellent cost performance as compared to that provided by other technologies.

Thus, with the present invention, it is possible to solve the problems such as undesirable environmental conditions for workers caused by organic solvents in printing plants or lamination plants. disasters, air pollution, health problems caused by solvents remaining in packaging materials for foods products, and expensive cost for environment protection.

## Claims

1. A method of producing photogravure printed laminated packaging material, which method comprises the steps:
**a)** printing a base film (1) using a photogravure printing method with water based photogravure printing inks (2) and using printing plates each with 200 to 400 lines and a plate depth in the range from 10 to 17 µ, and
**b)** laminating the photogravure printed base film (1,2) with its printed surface to an intermediate layer base film (3) by an extrusion lamination method using a polar resin (5).

2. A method of producing a photogravure printed laminated packaging material in accordance with claim 1, including the further step of applying a heat sealable resin layer (6) to the intermediate layer base film (3).

3. A method of producing a photogravure printed laminated packaging material in accordance with claim 1 or claim 2, including the further step of applying a heat sealable resin layer (6) to the intermediate layer base film (3) by an extrusion lamination method using a polar resin (5).

4. A method of producing a photogravure printed laminated packaging material in accordance with claim 1, 2 or 3, comprising the use of water based printing inks for the photogravure printing (2) which comprise the six primary colours of yellow, red, blue, orange, green, and purple in addition to black and white, the required colours being obtained by overprinting one colour after another to obtain desired hues.

5. A method of producing a photogravure printed laminated packaging material in accordance with any preceding claim, **characterised by** the use of a polyester film with an aluminium deposit as the intermediate base layer film (3).

## Patentansprüche

1. Verfahren zur Herstellung eines mittels Photogravüre bedruckten Mehrschichtverpackungsmaterials, welches folgende Schritte umfasst:
a) Drucken eines Basisfilms (1) unter Anwendung eines Photogravüredruckverfahrens mit Photogravüredruckfarben (2) auf Wasserbasis und unter Verwendung von Druckplatten mit jeweils 200 bis 400 Linien und einer Plattentiefe im Bereich zwischen 10 und 17 µ, und
b) Auflaminieren des mittels Photogravüre bedruckten Basisfilms (1, 2) mit seiner bedruckten Oberfläche auf einen Zwischenschicht-Basisfilm (3) mittels eines Extrusionsbeschichtungsverfahrens unter Verwendung eines polaren Kunstharzes (5).

2. Verfahren zur Herstellung eines mittels Photogravüre bedruckten Mehrschichtverpackungsmaterials nach Anspruch 1, **gekennzeichnet durch** den weiteren Schritt des Aufbringens einer heißklebbaren Kunstharzschicht (6) auf den Zwischenschicht-Basisfilm (3).

3. Verfahren zur Herstellung eines mittels Photogravüre bedruckten Mehrschichtverpackungsmaterials nach Anspruch 1 oder 2, **gekennzeichnet durch** den weiteren Schritt des Aufbringens einer heißklebbaren Kunstharzschicht (6) auf den Zwischenschicht-Basisfilm (3) **durch** ein Extrusionsbeschichtungsverfahren unter Verwendung eines polaren Kunstharzes (5).

4. Verfahren zur Herstellung eines mittels Photogravüre bedruckten Mehrschichtverpackungsmaterials nach Anspruch 1, 2 oder 3, umfassend die Verwendung von Druckfarben auf Wasserbasis für das Photogravüredrucken (2), die zusätzlich zu Schwarz und Weiß die sechs Primärfarben Gelb, Rot, Blau, Orange, Grün und Purpur umfassen, wobei die benötigten Farben durch das Übereinanderdrucken einer Farbe nach der anderen zur Erzielung der gewünschten Farbtöne erhalten werden.

5. Verfahren zur Herstellung eines mittels Photogravüre bedruckten Mehrschichtverpackungsmaterials nach einem der voranstehenden Ansprüche, **gekennzeichnet durch** die Verwendung eines Polyesterfilms mit Aluminiumauflage als Zwischenschicht-Basisfilm (3).

## Revendications

1. Procédé de production d'un matériau d'emballage stratifié imprimé par photogravure, lequel procédé comprend les étapes consistant à :
a) imprimer un film de base (1) en utilisant un procédé d'impression par photogravure avec des encres d'impression par photogravure à base d'eau (2) et en utilisant des plaques d'impression ayant chacune 200 à 400 lignes et une profondeur de plaque comprise dans la plage allant de 10 à 17 µ, et
b) stratifier le film de base imprimé par photogravure (1, 2) avec sa surface imprimée sur un film de base de couche intermédiaire (3) au moyen d'un procédé de stratification par extrusion en utilisant une résine polaire (5).

2. Procédé de production d'un matériau d'emballage stratifié imprimé par photogravure selon la revendication 1, comprenant l'étape supplémentaire consistant à appliquer une couche de résine thermosoudable (6) sur le film de base de couche intermédiaire (3).

3. Procédé de production d'un matériau d'emballage stratifié imprimé par photogravure selon la revendication 1 ou la revendication 2, comprenant l'étape supplémentaire consistant à appliquer une couche de résine thermosoudable (6) sur le film de base de couche intermédiaire (3) au moyen d'un procédé de stratification par extrusion en utilisant une résine polaire (5).

4. Procédé de production d'un matériau d'emballage stratifié imprimé par photogravure selon la revendication 1, 2 ou 3, comprenant l'utilisation d'encres d'impression à base d'eau pour l'impression par photogravure (2) qui comprend les six couleurs primaires de jaune, rouge, bleu, orange, vert et pourpre en plus du noir et du blanc, les couleurs souhaitées étant obtenues en surimprimant une couleur après une autre pour obtenir les tonalités souhaitées.

5. Procédé de production d'un matériau d'emballage stratifié imprimé par photogravure selon l'une quelconque des revendications précédentes, **caractérisé par** l'utilisation d'un film polyester avec un dépôt d'aluminium comme film de base de couche intermédiaire (3).
